# EUROPEAN PATENT SPECIFICATION

(11) **EP 3 883 359 B1**
(45) Date of publication and mention of the grant of the patent: **15.11.2023**
(21) Application number: 19820897.7
(22) Date of filing: 20.11.2019
(51) Int. Cl.: A01B 69/04, A01B 73/00, B60P 1/00, B60P 3/06

(54) **AUTONOMOUS TRACTOR AND METHOD TO CULTIVATE FARMLAND USING THIS TRACTOR**
AUTONOMER TRAKTOR UND VERFAHREN ZUR KULTIVIERUNG VON NUTZFLÄCHEN MIT DIESEM TRAKTOR
TRACTEUR AUTONOME ET PROCÉDÉ POUR CULTIVER DES TERRES AGRICOLES À L'AIDE DE CE TRACTEUR

(30) Priority: 22.11.2018 NL 2022047
(43) Date of publication of application: 29.09.2021
(73) Proprietor: Agxeed Holding B.V., 5808 AL Oirlo (NL)
(72) Inventor: SCHMITZ, Laurentius Hubertus Margaretha, 6105 AX Mariahoop (NL); HIDDEMA, Joris Jan, 5971 DL Grubbenvorst (NL)
(74) Representative: Janssen, Paulus J. P.
(86) International application number: PCT/NL2019/050757
(87) International publication number: WO 2020/106142

(56) References cited:
- EP-A1- 0 082 444
- EP-A1- 2 199 150
- US-B2- 10 111 373

## Description

### GENERAL FIELD OF THE INVENTION

The present invention pertains in general to autonomous tractors for autonomously crossing and cultivating farmland.

### BACKGROUND ART

The adoption of technology in agriculture has improved the approaches that farmers use in the farmland nowadays. Modern agriculture has made it easy for farmers to achieve high produce while using less input. According the trends in the use of technology in agriculture, there are high concerns that the future of agriculture is bright. For example, mechanization in agriculture has reduced the overuse of manpower in doing some of the farming activities. As a consequence, agricultural machines have become bigger and bigger and more dedicated towards performing one type of cultivation. The introduction of autonomous tractors is considered a next step into the future of farming and it is expected that using autonomous tractors, the trend of bigger and more dedicated (specialised) farming machines will continue.

Self-driving cars are common these days. Based on the trends in regards to the advancement of technology, one could expect that the technology will also be used for cultivating farmland. At present farmers in advanced countries are giving a tactical approach to how they plant, harvest, as well as maintain their crops. A good example of new tactical approaches is the use of autonomous tractors in agriculture. The concept of autonomous tractors can be traced back prior to the introduction of the concept of precision farming in the eighties. During these days, farmers used GPS technology as a guide to the tractors across the farmland. The aim of such an approach was the reduction of fuel consumption and enhancing the efficiency of the tractors and the farming activities. As such, these initial steps formed the basis for the development of autonomous tractors, following the introduction of technologies that improved communication over wireless devices. Autonomous tractors employ much the same approach as the driverless vehicles, i.e. using advanced control systems and sensors. With the inclusion of auto-steering abilities, such tractors have added control abilities. Evidently, the launch of the autonomous tractors is considerably a manifestation of the extended use of technology in farming.

Benefits to farmers are obvious. It is an undeniable fact that farming is not an easy undertaking, it involves working for long hours and the subscription to hard labor in harsh weather conditions. Taking into consideration the common state of farmers, the majority of them have no employees to task them in the farmland and hence, have to do everything all by themselves. The autonomous tractors can be a positive outcome. Next to this, accuracy and precision are important aspects in agriculture in various aspects such as planting. Regarding for example such planting, the autonomous tractors can be equipped with automatic planting systems that ensure high accuracy when planting. With such abilities, farmers are assured of seed conservation. All in all, the use of such tractors may lead to higher return on investment since accuracy is enhanced.

One of the factors that hinder agricultural production in both developed and developing countries is the lack of enough labor. Normally, farmers grow a small section of land which they are sure to manage with their limited labor. However, with the adoption of the autonomous tractors, the problem of labor insufficiency is catered for since the number of employees needed to cultivate the farmland may be reduced.

Also data plays a significant role in determining the farmers' decisions. Usually, the absence of clear and reliable data can interfere with the decisions farmers make, and subsequently, have adverse impacts on the amount of outcome obtained from the fields. There are diverse sources and types of data that a farmer needs to succeed in their farming activities. For example, data on soil is important in that it helps farmers in determining what crops will do well in a given piece of land by establishing the moisture content, and the amount of nutrients. The autonomous tractors can be fitted with various sensors that can be used in the collection of data on the conditions of the soil, and hence, offer a platform for improving the outcome of the available crops. The elimination of the human interaction in farming following the use of autonomous tractors may thus be advantageous. Stressed employees cannot achieve the required efficiency level in the fields. Similarly, it is often hard for humans to manage diverse tasks on the farm especially where a large farmland is involved. Autonomous tractors have the appropriate sensors to offer the necessary help in the management of a several tasks in the farmland hence reducing stress and the workload in the farm.

The autonomous tractors run on high level technology that can be used in gathering high profile information. For example, some models have automatic steering abilities and GPS technologies which enhance the control of the tractors' course. The advanced sensors come in handy in the determination of soil moisture level, activities around planting and harvesting, present yield, as well as the amount of fuel needed for a given area of land. Additionally, other models of autonomous tractors can guide farmers on how to apply fertilizers.

Autonomous tractors allow precise control of work and farm equipment. This makes it possible for farmers to extend their working hours. The sensors fitted in the tractors can guide it in the right course even in conditions of reduced visibility and at night: work continues even during windy, dusty, and foggy conditions. Additionally, the ability of the tractors to reduce workload and stress on employees comes in handy in increased working hours in a day since the farmer has a greater flexibility in the management of growing tasks.

Evidently, autonomous tractors can greatly improve farming. However, the self-driving tractors are yet to be approved and where technology itself does not seem to be a principle hurdle for big autonomous tractors to cultivate the land, legislation is. The autonomous travel to and from the land is obviously a big hurdle to take. Also, legislation prevents wide machines to be transported over the road. For example, EU regulation limits the width of an agricultural machine to 2,55 meters. Indeed, automatic folding of wider machines is already part of present day technology, but this greatly increase complexity and thus price, inherently pushing the machines further to become more specialised and particularly, bigger. This on its turn will make legislation even more complicated and may even mean that in practice, autonomous tractors will only be applied in remote, uncrowded or even only in unpopulated areas.

EP082444 discloses a tractor and a connector for connection of the tractor to a road haulage truck for transport over the road in a direction perpendicular to its working direction. The tractor needs to be separated in two parts in order not to exceed the maximum allowable road transportation width.

### OBJECT OF THE INVENTION

It is an object to mitigate the disadvantages of prior art autonomous tractors and their use, in particular to allow easier practical use without the need for massive new legislation.

### SUMMARY OF THE INVENTION

In order to meet the object of the invention, an autonomous tractor for autonomously crossing farmland was devised, the tractor comprising one or more sensors for detection of obstacles when crossing the farmland , a coupler for coupling an agricultural machine chosen from a group of agricultural machines each of which are able to be coupled to the tractor, and a connector for connecting the tractor to a road haulage truck for transport of the tractor over the road, wherein the direction of movement of the tractor for crossing the farmland is perpendicular to the direction of movement when the tractor is transported over the road for which the tractor has one set of wheels arranged such that the wheels can pivot such that their axis undergoes a 90° rotation to meet the perpendicular directions of movement, or two sets of wheels, a first set of which corresponds to the movement when crossing the farmland, and a second set of which corresponds to transport of the tractor over the road.

With this, the inventors go against the long trend of machines getting bigger and more specialised. This is based on the recognition that it may be sufficient for an autonomous tractor to be economically attractive, to be small and versatile: small in the sense that the tractor in principle does not need to be more than a generally applicable device for converting energy into motion ("a motor on wheels"). It does not need to have an integrated means for cultivating the land (such as the large combines and other harvest machines) as along as the tractor is able to be coupled to various different agricultural machines for working the farmland. This means that the present invention allows that the tractor can be kept relatively small. Still, by the fact that the tractor, and hence the agricultural machine operates autonomously, a good return on investment can be obtained (despite its small size) since it can operate up to 24 hours per day, 7 days per week. For a small machine on its turn, current legislation provides far less restrictions. However, to be economically viable, many machines simply need a working width of at least 3 meters. Even stronger, many contemporary machines have working width exceeding 5-6 meters up to even 20 meters or more. This on itself makes such machines unsuitable for transport over the road, and there is no solution in legislation. This problem is also relevant for an autonomous tractor: many machines simply need to have a working width of at least 3 meters. However, applicant recognised that this problem can also be overcome by devising a tractor which has arrangements such that the direction of movement of the tractor when crossing the land is perpendicular to the direction of movement during road transport. This means that when moving along a road, the agricultural machine extends in the transport direction, and thus, the longitudinal direction of the road, which means that there are far less legal restrictions. According to EU regulation for example, the combination of a truck and trailer may have a length up to 18.75 meters. At the same time, when keeping the length of the autonomous tractor for example below 2.55 (thus being quite small), during transport its width will not exceed 2.55 which means EU regulation during transport over the road is met with. Still, a third recognition was needed to arrive at the tractor of the invention: autonomous movement over public roads requires new legislation and is far from being reality. However, to equip the tractor with a cabin for an operator to be able and drive the tractor would increase cost tremendously and maybe even completely counter the economic advantage of being autonomous. In order to solve this, the inventors recognised that a mechanically simple connector (a drawbar, a fifth wheel connector, a winch etc.) for connecting the tractor to a road haulage truck for transport of the tractor over the road will do the trick: for transport over the public road the tractor is seen as a trailer or cargo and not as a motored vehicle. This in combination with a small width, due to the perpendicular transport direction, makes sure that the tractor according to the invention meets the most important laws and regulations that currently apply in Europe and North America.

So based on several insights and recognitions, the inventors were able to devise an autonomous tractor that overcomes a lot of the problems that actually prevent the use of such a tractor in practice, in particular in populated areas. The new device goes against the long trends, started in the 1930's, of bigger-and-bigger and more specialisation for any agricultural machine. Next to this, as an extra important advantage it appears that the current invention enables cultivating the land with a lower or even absent risk of soil compaction. Wheel traffic is without a doubt the major cause of soil compaction. Tractor weights have increased from less than 3 tons in the 1940s to approximately 20 tons today for the big four-wheel-drive units. This is of special concern because spring planting is often done before the soil is dry enough to support the heavy planting equipment. The current invention enables going back to tractors below 10 tons, or even below 5 tons, depending on the type of agricultural machines that need to be coupled.

The invention is also embodied in a method to cultivate farmland comprising coupling an agricultural machine to an autonomous tractor of the invention, connecting the tractor with its coupled agricultural machine to a road haulage truck for transport of the tractor over the road to a lot of farmland, unloading the tractor from the road haulage truck, and allowing the tractor to autonomously cross the farmland while the agricultural machine is cultivating the land.

### DEFINITIONS

A *tractor* is an agricultural vehicle that is used to pull agricultural machinery and to provide the energy needed for the machinery to cultivate the land (including any harvesting action). It commonly but not necessarily is a powerful vehicle with a gasoline or diesel engine and large rear wheels or endless belt tracks (so called caterpillar tracks).

An *autonomous* tractor is a tractor that can perceive its environment, make decisions based on what it perceives and recognizes and then actuate a movement or manipulation within that environment. These decision-based actions include but are not limited to starting, stopping, and maneuvering around obstacles that are in its way. Such a tractor can cross farmland without needing continuous control of a human operator, and when an agricultural machine is operatively connected to the tractor, it can autonomously cultivate the land.

A *road haulage truck* is a motor vehicle designed to be able and transport items over the public road, either by pulling the item (if it has wheels for transport over the road) or by carrying the item on a (semi-)trailer. A road haulage truck may for example be a regular human operated tractor, or a truck-trailer combination (the trailer for example being a flatbed trailer).

A *road* is a long narrow stretch with a smoothed or pave hard surface, mad for travelling by motor vehicle, carriage etc. between two or more points. A road is also referred to a street, or (high) way.

*Farmland* is land that is used for or suitable for farming.

A sensor is a device that responds to a physical stimulus such as heat, light, sound, pressure, magnetism, or a particular motion, and transmits a resulting impulse, for example for measurement or operating a control.

An *obstacle* is any item that prevents or impedes the free movement of an object in the environment. An obstacle can be a stationary physical item such as a big rock or a river, a movable item such as an animal or human being, but it can also be an imaginary item such as the border or a lot of land.

*Above* means at or to a place that is higher than someone or something.

The *footprint* of an item is the space the item occupies when viewed from above.

A *wheel* of a vehicle is an item arranged to revolve on an axis, such as a common spoked car wheel or a caterpillar track, which is used to convert a rotation (of the axis) into a translation of the vehicle.

A *specification* of a sensor denotes a parameter that is relevant for the capabilities of the sensors to pick up signals and to deliver corresponding output. Typical specifications are the "range", "accuracy", "resolution", "repeatability", "drift", "hysteresis", "stability", "response time", "settling time", "voltage required", "current drawn", "output" and "sensor noise estimation".

*Automatically* means without the need of (human) operator intervention. Automatically does not exclude that something is operator initiated or stopped as long the process can be completed without needing operator intervention.

A *central processing unit* or CPU is an electronic circuitry within a computer system that carries out the instructions of a computer program by performing the basic arithmetic, logic, controlling and input/output (I/O) operations specified by the instructions. The term "CPU" may refer to a tangible (single) processor, more specifically to its processing unit and control unit (CU), but may also refer to multiple processors distributed over a (wireless) networked system operating as if part of one single processor (for example partly present on the tractor, the machine and a remote server via a cloud system).

### EMBODIMENTS OF THE INVENTION

In an embodiment of the autonomous tractor according to the invention, the coupler is operable to move a coupled agricultural machine between two positions, the first of which is a position lateral to the tractor for cultivating the land, and the second of which is a position above the tractor. In this embodiment the agricultural machine can be lifted to and from the farmland, between a position to operate the land, and to a position above the tractor, away from the land. Preferably, the second position, i.e. the position above the tractor, coincides with a footprint of the tractor. In this preferred embodiment the machine can be lifted to actually right above the tractor. This is very advantageous during the transport of the tractor with a coupled machine over the road, since this means that the width in transport direction is not more than the width of the tractor, and also, since keeping a large weight such as that of a agricultural machine right above an item, poses less stringent conditions on the mechanics, when compared to a situation of keeping a large weight under an angle (i.e. less than 90° for example at 45°) above that item.

In the invention the tractor has a first set of wheels corresponding to the movement when crossing the farmland, and a second set of wheels corresponding to transport of the tractor over the road. Also one set of wheels could be used in the tractor of the invention, for example when arranged such that they can pivot such that their axis undergoes a 90° rotation to meet the perpendicular directions of movement, it has been found advantageous to use two sets of wheels, each set corresponding to either the direction of movement when crossing farmland or the direction of transport over the road. In a further embodiment the second set of wheels is arranged to be movable away from the farmland to prevent contact therewith when the tractor crosses the farmland.

In yet another embodiment wherein the connector comprises a drawbar, such that the tractor can be drawn onto a trailer or connected to be hauled as if a trailer, the drawbar is arranged to be put in an upright position when the tractor crosses the farmland.

In still another embodiment the agricultural machine has a fixed length of at least 3 meters. This embodiment has the advantage of having a reasonably large working width, while still being able to be transported over the road without needing to be width, while still being able to be transported over the road without needing to be collapsed. Although collapsing large agricultural machine sis a common technique, it leads to complex and expensive machine, prone to loss of reliability due to an increase in the number of parts.

In again another embodiment, wherein the tractor comprises a central processing unit (CPU) for receiving input signals from the one or more sensors and for controlling the movement of the tractor based on the input signals in order to avoid the obstacle, and wherein each of the agricultural machines of the group comprises one or more additional sensors for detection of the obstacles, the coupling of the agricultural machine comprises operatively connecting the one or more additional sensors to the CPU and automatically providing data to the CPU regarding the location of each of the one or more additional sensors on the agricultural machine and one or more specifications of each of these one or more additional sensors. Applicant recognised that much improvement can be obtained in the area of obstacle sensing. Although it is known in the art to use sensors on an autonomous vehicle for obstacle detection, and also, to use sensors on the part of the tractor that holds the actual cultivating machine (being a part of a specialised tractor), no attention has been given to small versatile tractors that are devised to be coupled with various different agricultural machines. Applicant realised that it is advantageous in such a situation that the coupling of the agricultural machine comprises operatively connecting the sensors of the couple agricultural machine to the CPU of the tractor and automatically providing data to the CPU of this tractor regarding the location of each of the one or more additional sensors on the agricultural machine and one or more specifications of each of these one or more additional sensors. This means that the sensors of the agricultural machine are integrated into the system such that the system as a whole can operate autonomously in the best possible way.

In a further embodiment the output signal of a sensor is under the control of the CPU.

In another further embodiment that the controlling the movement of the tractor calculated by the CPU is additionally based on one or more environmental circumstances of the tractor. Preferably the environmental circumstances are chosen from the group comprising 1) the presence of an agricultural machine adjacent the sensor, 2) the type of agricultural machine present, 3) the operating conditions of the agricultural machine, 4) the presence of a second autonomous tractor, 5) the physical properties of the farmland, 6) the weather conditions, 7) the presence of a human being in the vicinity of the tractor, 8) the type of said human being.

The method according to the invention can be adapted using any of the above embodiments of the tractor. In particular, in a preferred embodiment the agricultural machine during transport over the road is in a position above the tractor, and in a position lateral to the tractor when cultivating the land.

The invention will now be further explained using the following figures.

### EXAMPLES

Figure 1 is a schematic top plan view of an autonomous tractor.
Figure 2 is a schematic top plan view of the autonomous tractor of figure 1 with the agricultural machine in an elevated position.
Figure 3 is a schematic side view of the tractor, corresponding to figure 1.
Figure 4 is a schematic side view of the tractor, corresponding to figure 2.
Figure 5 is a schematic view of an alternative autonomous tractor.
Figure 6 is a schematic view of two autonomous tractors pulled by human operated tractor serving as a road haulage truck for transport over the road.
Figure 7 is a schematic view of an alternative arrangement of the combination as shown in figure 6.
Figure 8 is a schematic view of a further alternative arrangement of the combination as shown in figures 6 and 7.
Figure 9 is an example of an autonomous tractor suitable for autonomous transport over the road.
Figure 10 schematically shows the implantation of various sensors in line with the invention.
Figure 11 schematically depicts the arrangement of sensors and CPU.

### Figure 1

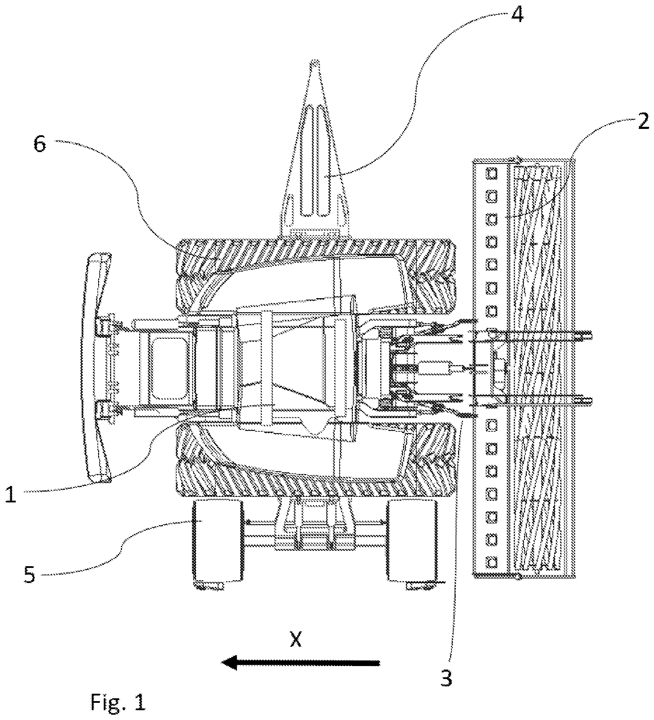

Figure 1 is a schematic top plan view of an autonomous tractor 1 for autonomously crossing farmland. The tractor crosses the farmland in the direction indicated as X. At is trailing end, coupled to the tractor via common triangle coupler 3 is a power harrow 2.

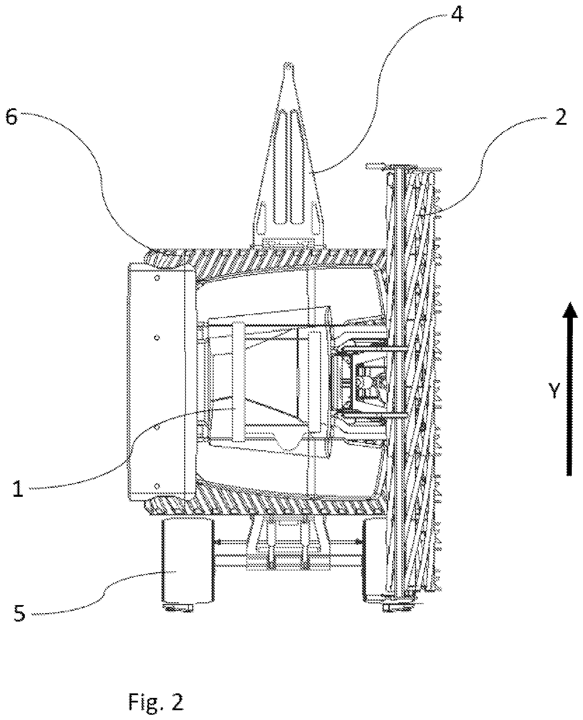

The triangle has standard dimensions and drive axle such that various common agricultural machines can be coupled to the tractor. During the autonomous crossing of the farmland in direction X, the power harrow rests on the land for cultivating it. The tractor has an internal engine (not depicted) which drives the wheels 6 and the power harrow. For making sure the tractor is not principally hindered by any obstacles, the front side is provided with several sensors (not depicted) for detection of such obstacles when crossing the farmland. Laterally, the tractor is provided with a drawbar 4 and opposite thereof, with a second set of wheels 5. The drawbar and second set of wheels are not in use when the tractor crosses the farmland. They serve to help in transporting the tractor over the road. To enable thus, the drawbar can be used for connecting the tractor to a road haulage truck for transport of the tractor over the road, whereas the set of wheels 5 acts to provide rolling support. According to the invention, the direction of movement of the tractor for crossing the farmland (X) is perpendicular to the direction of movement when the tractor is transported over the road. The latter direction is indicated in figure 2.

### Figure 2

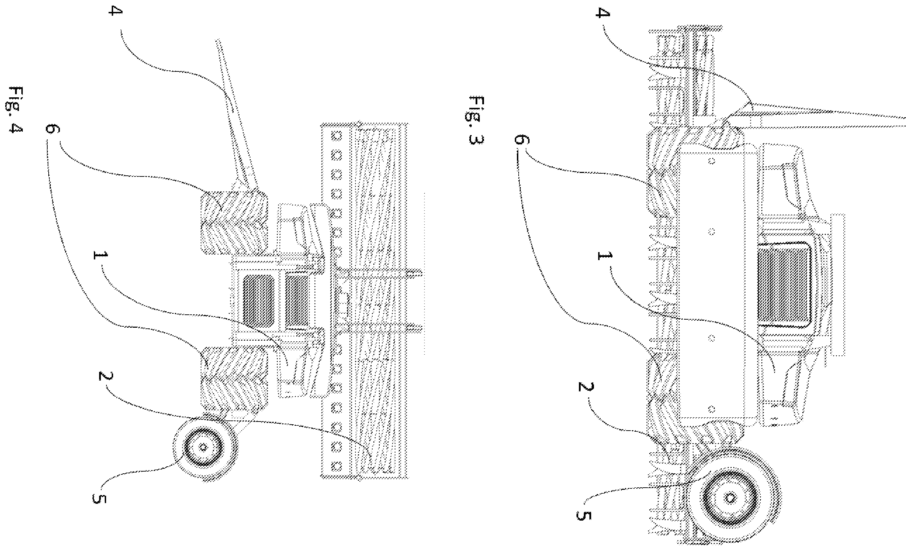

Figure 2 is a schematic top plan view of the autonomous tractor of figure 1 with the agricultural machine 2 in an elevated position. The coupler 3 is operable to move the coupled harrow between two positions (not excluding that the harrow can be put in any intermediate position), the first of which is the position lateral to the tractor for cultivating the land (as depicted in figures 1 and 3), and the second of which is a position above the tractor. This is the position as depicted in figure 2. A corresponding side view is shown in figure 4. As a result of taking the second position above the tractor, the second position coincides with the footprint of the tractor, i.e. the harrow's footprint overlaps completely (over the width of the tractor) with the footprint of the tractor. The result is that the combination in the direction of transport indicated as Y, is not wider than the width of the tractor itself.

### Figure 3

Figure 3 is a schematic side view of the tractor, corresponding to figure 1. In this side view the set of wheels 5 and the drawbar 4 are arranged in an elevated position so as to not interfere with the autonomous operation of the tractor.

### Figure 4

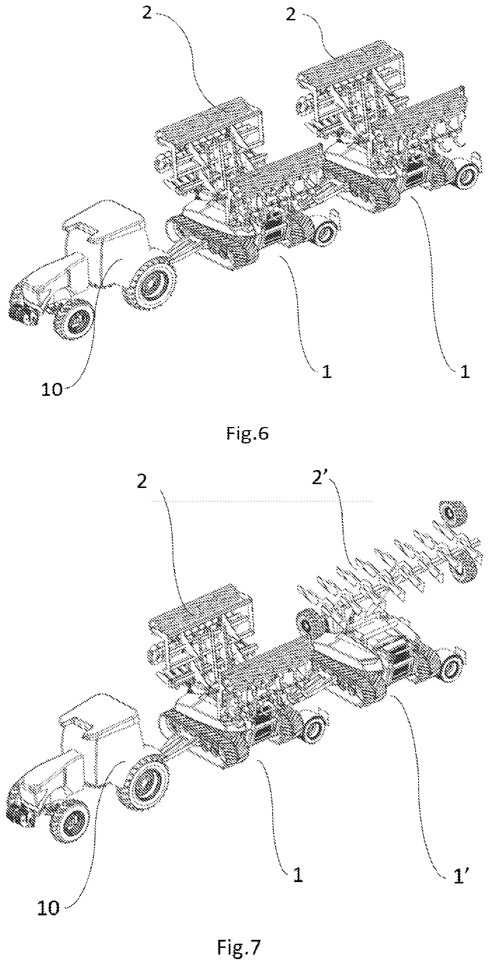

Figure 4 is a schematic side view of the tractor, corresponding to figure 2. In this side view the set of wheels 5 and the drawbar 4 are arranged in a lowered position so as to be able and support the road haulage of the tractor. The drawbar is used for connecting to a human operated truck. The wheels 5 serve to provide a rolling support of the tractor during road haulage (see figures 6, 7 and 8 for a combination of autonomous tractors with a human operated truck for road haulage).

### Figure 5

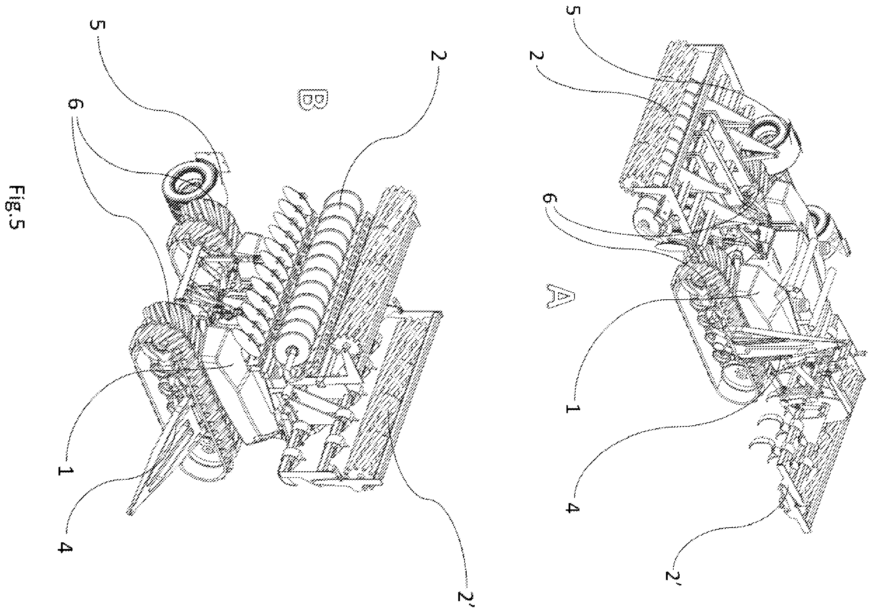

Figure 5, consisting of figure 5A and 5B, provide a schematic view of an alternative autonomous tractor 1. In figure 5A the tractor is shown in "cultivation" mode with a front end and trailing end agricultural machines 2 and 2' attached. Drawbar 4 and wheels 5 are in elevated position so as to not interfere with the cultivation of the farmland. Figure 5B shows the same tractor with the machines 2 and 2' in elevated position, and the drawbar 4 and wheels 5 in lowered position enabling road haulage. As can be seen, the advantage of a lack of a cabin for a human operator is that the machines can be elevated to a completely upright position, leading to the smallest width possible during road haulage and also, leading to less stringent mechanical demands for the couplers: the forces exerted on these couplers during transport are much smaller when the machines are right above the couplers, when compared to a situation wherein the machines are coupled under an angle of for example 45°.

### Figure 6

Figure 6 is a schematic view of two autonomous tractors 1 as depicted in figure 5, pulled by human operated tractor 10 serving as a road haulage truck for transport over the road. Both tractors 1 have the agricultural machines elevated to an upright position to provide for the smallest width possible.

### Figure 7

Figure 7 is a schematic view of an alternative arrangement of the combination as shown in figure 6. In this embodiment, the tractor 10 pulls two autonomous tractors 1 and 1'to which different agricultural machines are coupled.

### Figure 8

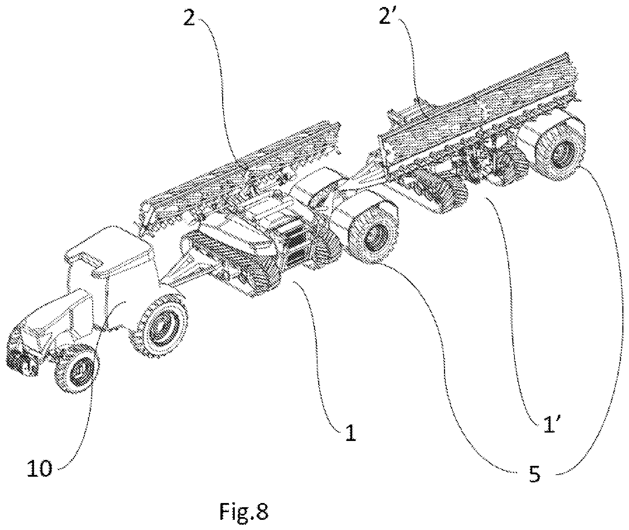

Figure 8 is a schematic view of a further alternative arrangement of the combination as shown in figures 6 and 7. In this combination the drawbars 4 and wheels set 5 are arranged on opposite sides of each tractor (when compared to each other), providing the advantage that the agricultural machines during transport over the road are present at opposite sides of each tractor. This decreases the risk that the machines mechanically interfere with the road transport.

### Figure 9

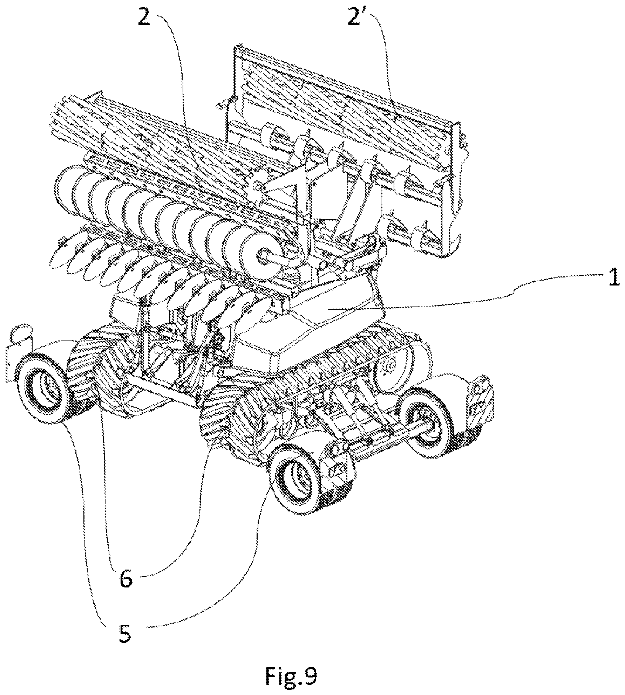

Figure 9 schematically depicts an example of an autonomous tractor suitable for autonomous transport over the road. In this embodiment at least one of the axles of wheels 5 is actuated by the motor of the tractor, and this axle, and/or the other one, may be arranged as a steering axle that can be used to navigate the road. The technology for the autonomous transport/driving of this tractor over the road may be the same as present day technology used for autonomous cars.

### Figure 10

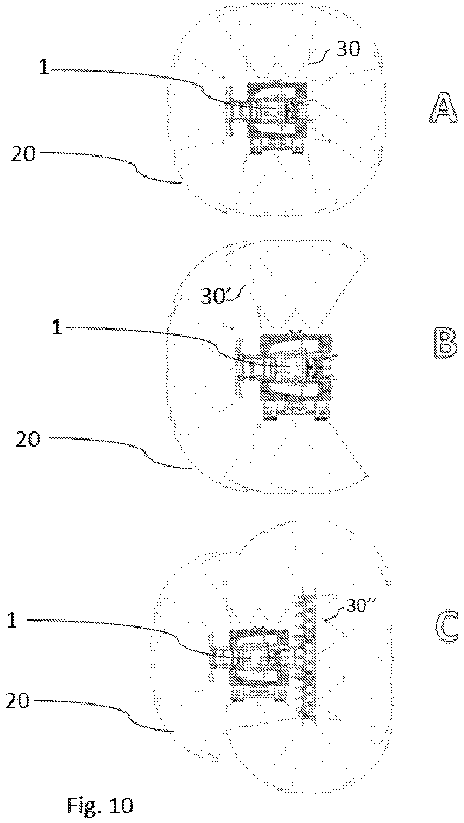

Figure 10, comprising sub-figures 10A, 10B and 10C schematically shows the implantation of various sensors in line with the invention. In figure 10A an autonomous tractor without an agricultural machine coupled thereto is depicted. The sensors (not shown) create a virtual cage 30 in an area 20. If an obstacle, for example a person, is sensed in the virtual cage 30, the CPU will react to control the movement of the tractor to avoid overriding the person, e.g. by stopping the machine, or by (anticipating) slowing down and at the same time providing a light and sound signal to warn the person of the vicinity of the tractor.

Figure 10B shows the situation wherein an agricultural machine 2 is connected to the tractor (the machine 2 itself is not depicted in figure 10B for reasons of clarity; see figure 10C for the actual machine 2 being present). In line with the invention, as soon as the machine is (electronically) connected to the CPU of the tractor (which maybe via a hardware connection using a connector/ISOBUS etc., or via a wireless connection) the CPU is provided automatically with data regarding the location of each of the one or more additional sensors on the agricultural machine and one or more specifications of each of these one or more additional sensors. In this embodiment, the CPU automatically shuts off the sensors of the tractor that sense the agricultural machine leading to adjusted virtual cage 30' (as depicted in Figure 10B). This virtual cage 30' is in fact the same cage as 30, minus the part facing the agricultural machine. Once connected, the CPU also automatically shuts on the sensors of the agricultural machine. This leads to the virtual cage 30" as depicted in Figure 10C. As a consequence, the combination of tractor and machine can operate with the combined sensors on the tractor and machine, in essence "seeing" the combination of the tractor and agricultural machine as one unit for crossing the farmland.

In practice it may be that several independent tractors will cross the same lot of farmland simultaneously to cultivate the land together. If so, it is important that the various tractors (plus machines) do not see each other as regular obstacles, which could lead to a situation that they react to each other, stop and don't continue to work. So as soon as various autonomous tractors are working close to each other there should be communication between the combinations about position, speed, and travel direction but also about dimensions implements have. The sensors can be useful in this respect.

Another aspect of the invention is that the tractors may be able to distinguish between (curious) spectators and an operator. Where the machine has to be 100% safety proof for general public, the operator sometimes has to observe the tractor and/or machine closely to real time adjust and verify the result of the cultivation job executed by the machine. This could for example lead to a system wherein if a common spectator is sensed within 10 meters of the tractor at a certain speed, the machine starts providing light and sounds signals, or even stops if the spectator is within 5 meters of the tractor, whereas for an operator such actions are only undertaken at 3 and 1 meter respectively when the tractor travels at the same speed. An operator could for example be recognised via wireless communication between the CPU of the tractor and a smartphone, or other hand held device of the operator, or by sensing a physical property of the operator (such as the iris, face, or any other physical characteristic). Also, output signals of one or more sensors connected to an operator may be used as input for the CPU. In an embodiment, as soon as the operator is present in the virtual cage, he (or she) receives a signal thereabout. This improves the safety of the operating conditions.

### Figure 11

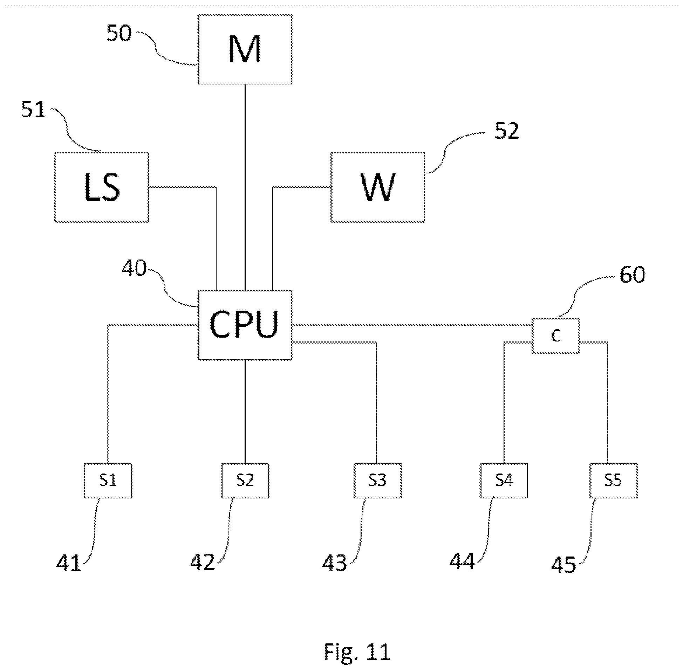

Figure 11 schematically depicts the arrangement of sensors 41 through 45 and CPU 40 in a combination of a tractor and agricultural machine according to the invention. The sensors 41, 42 and 43 are part of the tractor and have a fixed connection with the CPU 40. They provide an output signal to the CPU, which on its turn controls and actuated the motor 50 of the tractor ("M"), a light and sound warming system 51 ("LS") and/or a (virtual) steering wheel 52 ("W"). The sensors 44 and 45 are part of the agricultural machine and connected to the CPU via connector 60.

## Claims

1. An autonomous tractor for autonomously crossing farmland, comprising one or more sensors for detection of obstacles when crossing the farmland , a coupler for coupling an agricultural machine chosen from a group of agricultural machines each of which are able to be coupled to the tractor, and a connector for connecting the tractor to a road haulage truck for transport of the tractor over the road, wherein the direction of movement of the tractor for crossing the farmland is perpendicular to the direction of movement when the tractor is transported over the road, for which the tractor has one set of wheels arranged such that the wheels can pivot such that their axis undergoes a 90° rotation to meet the perpendicular directions of movement, or two sets of wheels, a first set of which corresponds to the movement when crossing the farmland, and a second set of which corresponds to transport of the tractor over the road.

2. An autonomous tractor according to claim 1, **characterised in that** the coupler is operable to move a coupled agricultural machine between two positions, the first of which is a position lateral to the tractor for cultivating the land, and the second of which is a position above the tractor.

3. An autonomous tractor according to claim 2, **characterised in that** the second position coincides with a footprint of the tractor.

4. An autonomous tractor according to claim 1, **characterised in that** the second set of wheels is arranged to be movable away from the farmland to prevent contact therewith when the tractor crosses the farmland.

5. An autonomous tractor according to any of the preceding claims wherein the connector comprises a drawbar, **characterised in that** the drawbar is arranged to be put in an upright position when the tractor crosses the farmland.

6. An autonomous tractor according to any of the preceding claims, **characterised in that** the agricultural machine has a fixed length of at least 3 meters.

7. An autonomous tractor according to any of the preceding claims, wherein the tractor comprises a central processing unit (CPU) for receiving input signals from the one or more sensors and for controlling the movement of the tractor based on the input signals in order to avoid the obstacle, wherein each of the agricultural machines of the group comprises one or more additional sensors for detection of the obstacles, **characterised in that** the coupling of the agricultural machine comprises operatively connecting the one or more additional sensors to the CPU and automatically providing data to the CPU regarding the location of each of the one or more additional sensors on the agricultural machine and one or more specifications of each of these one or more additional sensors.

8. An autonomous tractor according to claim 7, **characterised in that** the output signal of a sensor is under the control of the CPU.

9. An autonomous tractor according to any of the claims 7 or 8, **characterised in that** the controlling the movement of the tractor calculated by the CPU is additionally based on one or more environmental circumstances of the tractor.

10. An autonomous tractor according to claim 9, **characterised in that** the environmental circumstances are chosen from the group comprising 1) the presence of an agricultural machine adjacent the sensor, 2) the type of agricultural machine present, 3) the operating conditions of the agricultural machine, 4) the presence of a second autonomous tractor, 5) the physical properties of the farmland, 6) the weather conditions, 7) the presence of a human being in the vicinity of the tractor, 8) the type of said human being.

11. A method to cultivate farmland comprising coupling an agricultural machine to an autonomous tractor according to any of the preceding claims, connecting the tractor with its coupled agricultural machine to a road haulage truck for transport of the tractor over the road to a lot of farmland, unloading the tractor from the road haulage truck, and allowing the tractor to autonomously cross the farmland while the agricultural machine is cultivating the land.

12. A method according to claim 11, **characterised in that** the agricultural machine during transport over the road is in a position above the tractor, and in a position lateral to the tractor when cultivating the land.

## Patentansprüche

1. Autonomer Traktor zum autonomen Überqueren von landwirtschaftlicher Nutzfläche, umfassend einen oder mehrere Sensoren für eine Erfassung von Hindernissen, wenn er die landwirtschaftliche Nutzfläche überquert, einen Koppler zum Koppeln einer Landmaschine, die aus einer Gruppe von Landmaschinen ausgewählt ist, die jeweils in der Lage sind, mit dem Traktor gekoppelt zu werden, und einen Verbinder zum Verbinden des Traktors mit einem Güterkraftverkehrslastwagen für einen Transport des Traktors über die Straße, wobei die Bewegungsrichtung des Traktors zum Überqueren der landwirtschaftlichen Nutzfläche senkrecht zu der Bewegungsrichtung ist, wenn der Traktor über die Straße transportiert wird, wofür der Traktor einen Satz von Rädern, der derart angeordnet ist, dass sich die Räder derart drehen können, dass ihre Achse eine Rotation von 90° erfährt, um die senkrechten Bewegungsrichtungen einzuhalten, oder zwei Sätze von Rädern aufweist, von denen ein erster Satz der Bewegung des Traktors entspricht, wenn er die landwirtschaftliche Nutzfläche überquert, und von denen ein zweiter Satz dem Transport des Traktors über die Straße entspricht.

2. Autonomer Traktor nach Anspruch 1, **dadurch gekennzeichnet, dass** der Koppler betriebsfähig ist, um eine gekoppelte Landmaschine zwischen zwei Positionen zu bewegen, von denen die erste eine Position seitlich zu dem Traktor zum Kultivieren des Bodens ist, und von denen die zweite eine Position über dem Traktor ist.

3. Autonomer Traktor nach Anspruch 2, **dadurch gekennzeichnet, dass** die zweite Position mit einer Stellfläche des Traktors zusammenfällt.

4. Autonomer Traktor nach Anspruch 1, **dadurch gekennzeichnet, dass** der zweite Satz von Rädern angeordnet ist, um von der landwirtschaftlichen Nutzfläche weg bewegbar zu sein, um einen Kontakt damit zu verhindern, wenn der Traktor die landwirtschaftliche Nutzfläche überquert.

5. Autonomer Traktor nach einem der vorstehenden Ansprüche, wobei der Verbinder eine Deichsel umfasst, **dadurch gekennzeichnet, dass** die Deichsel angeordnet ist, um in eine aufrechte Position versetzt zu werden, wenn der Traktor die landwirtschaftliche Nutzfläche überquert.

6. Autonomer Traktor nach einem der vorstehenden Ansprüche,
**dadurch gekennzeichnet, dass** die Landmaschine eine feste Länge von mindestens 3 Metern aufweist.

7. Autonomer Traktor nach einem der vorstehenden Ansprüche, wobei der Traktor eine zentrale Verarbeitungseinheit (CPU) zum Empfangen von Eingangssignalen von dem einen oder den mehreren Sensoren und zum Steuern der Bewegung des Traktors basierend auf den Eingangssignalen umfasst, um das Hindernis zu vermeiden, wobei jede der Landmaschinen der Gruppe einen oder mehrere zusätzliche Sensoren für die Erfassung der Hindernisse umfasst, **dadurch gekennzeichnet, dass** das Koppeln der Landmaschine ein Wirkverbinden des einen oder der mehreren zusätzlichen Sensoren mit der CPU und ein automatisches Bereitstellen von Daten an die CPU bezüglich des Orts jedes des einen oder der mehreren zusätzlichen Sensoren auf der Landmaschine und einer oder mehrerer Spezifikationen jedes dieses einen oder dieser mehreren zusätzlichen Sensoren umfasst.

8. Autonomer Traktor nach Anspruch 7, **dadurch gekennzeichnet, dass** das Ausgangssignal eines Sensors unter der Steuerung der CPU liegt.

9. Autonomer Traktor nach einem der Ansprüche 7 oder 8,
**dadurch gekennzeichnet, dass** das Steuern der Bewegung des Traktors, die durch die CPU berechnet wird, zusätzlich auf einem oder mehreren Umgebungsumständen des Traktors basiert.

10. Autonomer Traktor nach Anspruch 9, **dadurch gekennzeichnet, dass** die Umgebungsumstände aus der Gruppe ausgewählt sind, umfassend 1) das Vorhandensein einer Landmaschine angrenzend an den Sensor, 2) die Art von Landmaschine, die vorhanden ist, 3) die Betriebsbedingungen der Landmaschine, 4) das Vorhandensein eines zweiten autonomen Traktors, 5) die physikalischen Eigenschaften der landwirtschaftlichen Nutzfläche, 6) die Wetterbedingungen 7) das Vorhandensein eines Menschen, der sich in der Nähe des Traktors befindet, 8) die Art des menschlichen Wesens.

11. Verfahren, um landwirtschaftliche Nutzfläche zu kultivieren, umfassend das Koppeln einer Landmaschine mit einem autonomen Traktor nach einem der vorstehenden Ansprüche, das Verbinden des Traktors mit seiner gekoppelten Landmaschine mit einem Güterkraftverkehrslastwagen für den Transport des Traktors über die Straße zu einer Parzelle von landwirtschaftlicher Nutzfläche, ein Abladen des Traktors von dem Güterkraftverkehrslastwagen, und ein Ermöglichen, dass der Traktor die landwirtschaftliche Nutzfläche autonom überquert, während die Landmaschine den Boden kultiviert.

12. Verfahren nach Anspruch 11, **dadurch gekennzeichnet, dass** die Landmaschine während des Transports über die Straße in einer Position über dem Traktor und in einer Position seitlich zu dem Traktor ist, wenn der Boden kultiviert wird.

## Revendications

1. Tracteur autonome permettant de traverser de manière autonome un terrain agricole, comprenant un ou plusieurs capteurs pour la détection d'obstacles lors de la traversée du terrain agricole, un accouplement destiné à accoupler une machine agricole choisie dans un groupe de machines agricoles dont chacune peut être accouplée au tracteur, et une liaison destinée à relier le tracteur à un camion de transport routier pour le transport du tracteur sur la route, la direction de déplacement du tracteur pour traverser le terrain agricole étant perpendiculaire à la direction de déplacement lorsque le tracteur est transporté sur la route, transport pour lequel le tracteur a un jeu de roues agencé de telle sorte que les roues peuvent pivoter de telle sorte que leur axe subit une rotation de 90° pour respecter les directions perpendiculaires de déplacement, ou deux jeux de roues dont un premier jeu correspond au déplacement lors de la traversée du terrain agricole, et dont un second jeu correspond au transport du tracteur sur la route.

2. Tracteur autonome selon la revendication 1, **caractérisé en ce que** l'accouplement est fonctionnel pour déplacer une machine agricole accouplée entre deux positions, dont la première est une position latérale au tracteur permettant de cultiver le terrain, et dont la seconde est une position au-dessus du tracteur.

3. Tracteur autonome selon la revendication 2, **caractérisé en ce que** la seconde position coïncide avec un encombrement au sol du tracteur.

4. Tracteur autonome selon la revendication 1, **caractérisé en ce que** le second jeu de roues est agencé pour pouvoir être déplacé à l'écart du terrain agricole pour empêcher un contact avec celui-ci lorsque le tracteur traverse le terrain agricole.

5. Tracteur autonome selon l'une quelconque des revendications précédentes dans lequel la liaison comprend un timon, **caractérisé en ce que** le timon est agencé pour être placé dans une position dressée lorsque le tracteur traverse le terrain agricole.

6. Tracteur autonome selon l'une quelconque des revendications précédentes, **caractérisé en ce que** la machine agricole a une longueur fixe d'au moins 3 mètres.

7. Tracteur autonome selon l'une quelconque des revendications précédentes, le tracteur comprenant une unité centrale de traitement (CPU) permettant de recevoir des signaux d'entrée provenant du ou des capteurs et de commander le déplacement du tracteur en fonction des signaux d'entrée afin d'éviter l'obstacle, chacune des machines agricoles du groupe comprenant un ou plusieurs capteurs supplémentaires pour la détection des obstacles,
**caractérisé en ce que** l'accouplement de la machine agricole comprend une connexion fonctionnelle du ou des capteurs supplémentaires à la CPU et la fourniture automatique de données à la CPU concernant la localisation de chacun du ou des capteurs supplémentaires sur la machine agricole et une ou plusieurs spécifications de chacun du ou des capteurs supplémentaires.

8. Tracteur autonome selon la revendication 7, **caractérisé en ce que** le signal de sortie d'un capteur est sous la commande de la CPU.

9. Tracteur autonome selon l'une quelconque des revendications 7 ou 8, **caractérisé en ce que** la commande du déplacement du tracteur calculé par la CPU est en outre en fonction d'une ou plusieurs circonstances environnementales du tracteur.

10. Tracteur autonome selon la revendication 9, **caractérisé en ce que** les circonstances environnementales sont choisies dans le groupe comprenant 1) la présence d'une machine agricole adjacente au capteur, 2) le type de machine agricole présente, 3) les conditions de fonctionnement de la machine agricole, 4) la présence d'un second tracteur autonome, 5) les propriétés physiques du terrain agricole, 6) les conditions météorologiques, 7) la présence d'un être humain au voisinage du tracteur, 8) le type dudit être humain.

11. Procédé pour cultiver un terrain agricole comprenant l'accouplement d'une machine agricole à un tracteur autonome selon l'une quelconque des revendications précédentes, la liaison du tracteur avec sa machine agricole accouplée à un camion de transport routier pour un transport du tracteur sur la route vers une parcelle de terrain agricole, le déchargement du tracteur du camion de transport routier, et le fait de permettre au tracteur de traverser de manière autonome le terrain agricole alors que la machine agricole est en train de cultiver le terrain.

12. Procédé selon la revendication 11, **caractérisé en ce que** la machine agricole pendant le transport sur la route se trouve dans une position au-dessus du tracteur, et dans une position latérale au tracteur lors de la culture du terrain.
